Europäisches Patentamt

(19) European Patent Office

Office européen des brevets

(11) Publication number: **0 037 197**

**A2**

(12) **EUROPEAN PATENT APPLICATION**

(21) Application number: **81301055.0**

(22) Date of filing: **13.03.81**

(51) Int. Cl.³: **F 16 H 5/78**

(30) Priority: **25.03.80 GB 8009990**

(43) Date of publication of application:
**07.10.81 Bulletin 81/40**

(84) Designated Contracting States:
**DE FR GB IT SE**

(71) Applicant: **Dana Corporation**
**P O Box 1000**
**Toledo Ohio 43697(US)**

(72) Inventor: **Morrison, William McKenzie Meek**
**57 Seagar Street**
**Sandwell West Bromwich West Midlands(GB)**

(74) Representative: **Corfield, Peter Ralph et al,**
**MARKS & CLERK Alpha Tower, ATV Centre**
**Birmingham B1 1TT(GB)**

(54) Splitter control for a transmission.

(57) A splitter control for a transmission, for a heavy vehicle, which has a multi-ratio gearbox and an auxiliary splitter unit, the control being fluid pressure operable and comprising a pre-select valve 15 in which a signal from a splitter selector 10, 11 is stored, a trigger valve 16 which actuated through a link 26 from the vehicle clutch pedal and permits the signal in the pre-select valve 15 to be used to initiate actuation of a control valve 17, the control valve being arranged to acutate a splitter actuator 44, 45 or 46 to carry out selection between two ratios in the splitter unit.

EP 0 037 197 A2

./...

COMPLETE DOCUMENT

Fig. 1

This invention relates to a transmission,
particularly though not exclusively for heavy motor
vehicles, which includes multi-speed gearbox with a
selection mechanism and a two speed auxiliary unit which
is operable to allow two output ratios to be selected
for each of the ratios available in the gearbox.

The two speed auxiliary unit is called a splitter
unit and is controllable separately from the gearbox.
Selection of the gear ratios in the gearbox is by the
usual manual direct or remote control, through the
selection mechanism which normally includes mechanical
linkage and the splitter is usually selected by an
electrical switch actuating a pneumatic cylinder, or
wholly by pneumatic means.

With conventional systems the driver of a vehicle
fitted with a splitter system must concentrate on choice
of ratio at the time of making the changes and this
inevitably reduces, in proportion, the driver's
concentration on the road. However the splitter principle
is very convenient, particularly for very heavy vehicles
since the driver has a choice of a large number of ratios
which are relatively closely spaced. This is preferable,
for example on such heavy vehicles, to a range change system
in which a two speed unit also allows a large choice of
ratios, with a range change system, the gearbox ratios
are each used twice but by means of a change of output
ratio or range. This therefore involves one large change
in ration, between the two ranges.

It is known, in a transmission with an auxiliary
two speed unit, to provide a control by means of which
the operator or driver can pre-select a ratio in the
auxiliary unit and the unit is only brought into
operative condition, for that ratio, when the vehicle
clutch is actuated. Examples of this is described in United States of America Patent Specifications
2,445,716, 2,529,393, 2,582,895 and 2,640,374. The concept
of fluid pressure operati n of the control, using storage
of pressure signals until a mechanical operation is
carried out is also known.

It is the object of this invention to provide a
splitter control for a transmission in which the driver's
concentration on the road is not diverted to the choice
of transmission ratio more than necessary.

According to the present invention there is provided
a splitter control for a transmission which has a multi-
ratio gearbox and an auxiliary splitter unit, the
gearbox having a selector mechanism and the splitter
unit having a separate selector arranged to actuate
said control to pre-select a ratio in said splitter unit,
and a clutch actuator connected to the control whereby
the ratio change in the splitter unit is actuated, the
control being operable by fluid pressure, characterised
in that the control includes a pre-select valve, a control
valve and a trigger valve, the pre-select valve being
arranged to receive a signal from the selector of the
splitter unit, the trigger valve being connected to the
clutch actuator to actuate the control valve, whereby
the actuation of the ratio change in the splitter unit
is carried out.

The invention will now be described by way of
example with reference to the accompanying drawings,
in which:-

Figure 1 is a diagrammatic representation of a
splitter control for a transmission constructed in
accordance with the invention;

Figure 2 is a cross-sectional side elevation view
of a unit forming part of the control and

Figure 3 is a cross-sectional plan view of the same unit.

The system illustrated is intended for use in a heavy motor vehicle, though the control may be used in any equipment which includes a transmission from a prime mover to a driven element such as the road wheels of a vehicle, the transmission including a gearbox 7 offering a choice of a number of speed ratios which are selected by a manual control lever. The manual control lever may act directly on the selector mechanism in the gearbox or alternatively a remote control mechanism may be incorporated which is at least in part mechanical.

The apparatus described furthermore has a source of fluid under pressure, preferably and as described in this case, compressed air.

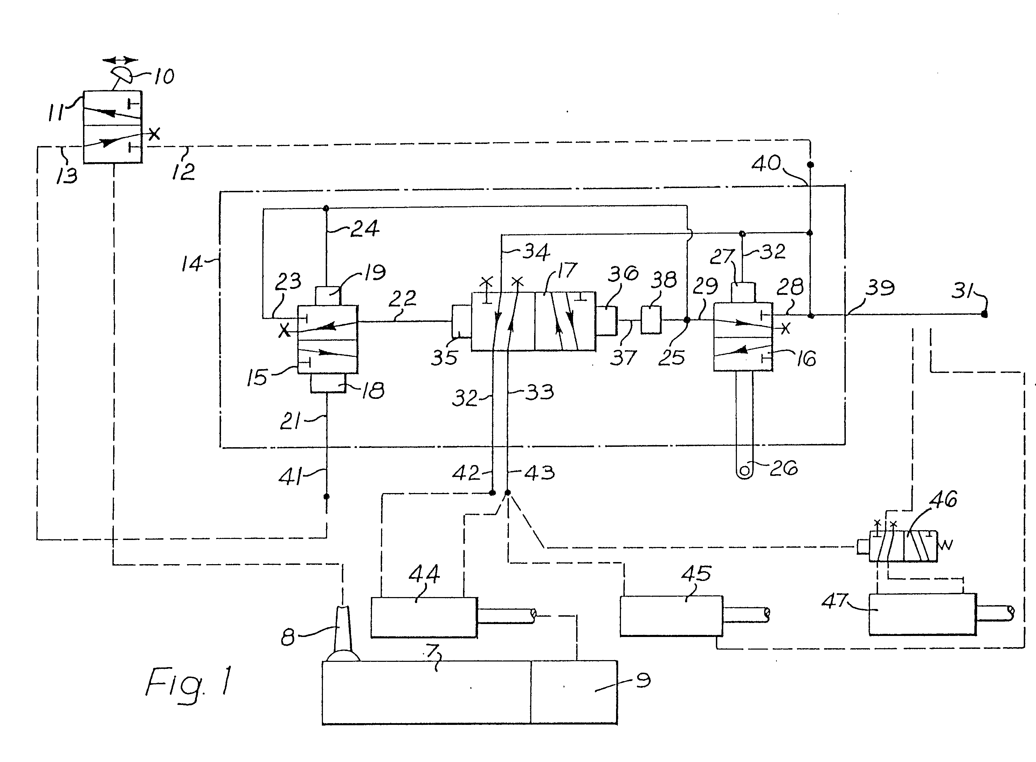

Referring to Figure 1, there is shown a driver's control 10 which may be conveniently situated on the manual control lever 8. This control 10 is connected to a two position drivers control valve 11 having an input and an output identified at 12 and 13 respectively. In one position, as shown, the input is not connected to the output but in the second position, they communicate to allow fluid to pass from the input 12 to the output 13. This drivers control valve 11 may be actuated by a control 10 in the form of a small switch or plunger.

Shown enclosed in dotted lines at 14, is a unit which is controllable by means of the driver control 10. This unit includes three valves 15, 16 and 17. Each is shown in the form of a spool valve. The first of these valves 15 is a pre-select valve and is a two position valves having pneumatic means of operation 18 and a pneumatic bias 19 opposing the means of operation 18. The pre-select valve 15 has an input 21 connected to the output 13 of the drivers control valve 11 and it has a further input 22 and an output 23 which will be further
described. The pneumatic bias 19 is connected through
a still further inlet 24 to a connection at 25 between
the valves 16 and 17.

The trigger valve 16 has a mechanical connection
at 26 and a pneumatic bias at 27. The trigger valve 16
is also a two position valve having an input 28 and
an output 29, the latter being in communication with the
connection 24 previously referred to which supplies the
pneumatic bias 19 of the pre-select valve 15.

The input 28 to the trigger valve is connected to a
source of supply indicated at 31 and the input 32 to the
bias of the trigger valve 16 is also connected to the
supply 31, the driver's control valve 11 has its input
12 also connected to the supply 31.

The third valve 17 is a control valve which is also
a two position valve but, in this example, has twin
connections to two outputs 32, 33. There is an input 34
connected to the supply 31 and there is a pneumatic
operating means 35 opposed by a pneumatic bias 36. The
pneumatic bias has an input 37 communicating with the
connection 25 through a delay chamber 38.

The unit 14 thus has the following external
connections. There is an input 39 from the supply 31
an output 40 directly connected to the input 39 and
communicating with the input 12 of the drivers control
valve 11. A further input 41 communicates with the
outlet of the drivers control valve 11 and communicating
internally with the operating means 21 of the pre-select
valve 15 and there are the twin outputs 42, 43 which
communicate internally with the control valve 17 and are
shown communicating with different types of splitter
actuator for a splitter device in the associated gearbox.

Numeral 44 indicates a direct acting actuator cylinder having connections at its opposite ends respectively, to the outputs 42 and 43 from the unit 14. Numeral 45 indicates a differential actuator connected to the outputs 43 and when this is used air, is obtained directly from the supply 31 and the other output 42 from the control valve is blocked.

A third form of splitter actuator includes a spring loaded spool valve 46 connected to the output 43 and also connected to the air supply 31. This spool valve 46 is actuated by application of fluid pressure through the output 43 and in alternative positions is arranged to actuate a pilot air actuator cylinder 47.

There is also the mechanical connection, at 26, which is to the clutch mechanism of the transmission. This is preferably as close to the operative part of the clutch system as possible in order that maximum sensitivity is achieved. Preferably provision should be made in the associated linkage for compensation for changes in the length of the stroke of the clutch operating parts as a result of wear or other factors.

In use, the driver can select the ratio required in the gearbox in the usual way by means of the manual control lever. However when he wishes to make a split change in the selected gear position, he actuates the control 10 for the drivers control valve 11. He carries out this operation prior to the making of the change by means of the splitter and this operation can therefore be carried out at any convenient time, when the driver is not otherwise occupied, in advance of the anticipated change.

Actuation of the drivers control valve 11 has the effect.

of introducing air under pressure from the supply 31 through the valve 11 and to the actuating means 18 of the pre-select valve 15. This is sufficient to overcome the pneumatic bias 19 of this pre-select valve so that it changes to its second position in which the input 22 and output 23 are in communication and pressure is applied to the operating means 35 of the control valve 17. This will tend to bring the control valve into the position shown in which air supply through 34 and 32 are connected to the direct air actuator 44 if this system is used.

The control valve 17 will not however move until the trigger valve 16 has been operated through its mechanical connection 26 to bring the air supply onto the bias 36 of the control valve 17 through the delay chamber 38. The purpose of the latter is to prevent shunting of the pressures by equalising the sensitivity of the control valve bias and the operating means, When the control valve does move from the position shown, the air supply is brought onto the output connection 43 so that the actuator 44 is caused to move the splitter device in appropriate direction.

The system is designed to work in two opposite directions of movement of the control valve and thus of the associated actuator 44 and the control valve normally remains in its selected position until a further pulse is applied.

When the differential actuator 45 is in use, the control valve is used to apply pressure in one direction, whereas pressure is normally supplied in the other direction directly from the supply 31. Similar conditions exist in the pilot air actuator 47 and associated spool valve 46. As previously mentioned, in both examples of the differential actuator or the pilot air actuator 45 or 47, the output 42 from the unit is blocked. It is noted that the mechanical connection 26 normally opposes the bias 27 of the trigger valve 16 but this is brought into use to move the trigger valve 16 when the mechanical connection 26 is appropriately moved through the associated clutch mechanism. With this arrangement therefore the driver can pre-select a chosen splitting operation in the associated gearbox and the change is made when the clutch is actuated.

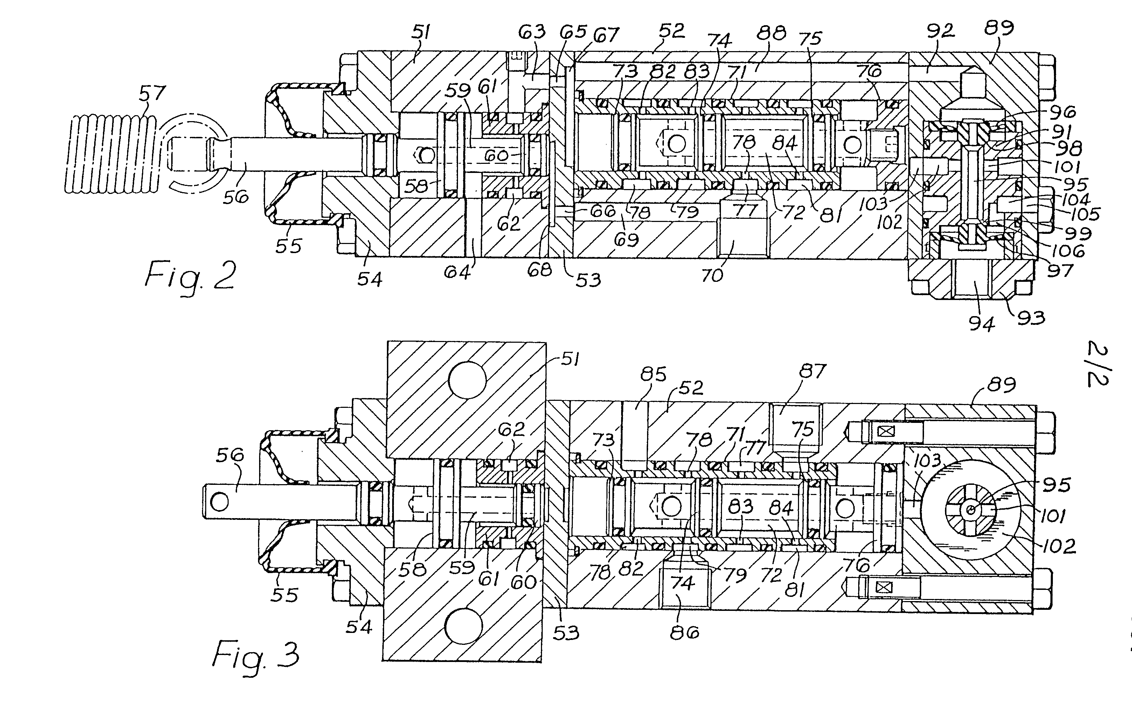

Figures 2 and 3 show the unit in one form. This includes two body parts 51, 52 which are connected together through an air transfer plate 53. The body part 51 has an end cap 54 to which is attached a flexible sealing collar 55. Passing through the collar and the cap 54 and into the body part 51 is a rod 56 which at its external end is connected to a coiled tension spring 57 which in turn is connected to the associated clutch mechanism. Within the body part 51, the rod 56 carries a piston 58 slidably engaged in a cylinder formed in the body part 51. A piston 58 which is connected to the rod 56 through screw connection, has an extension 59 terminating in a smaller piston portion 60 which engages in an internal cylindrical surface in a sleeve 61. The sleeve is secured in the end of the cylinder formed in the body part 51. The sleeve has an external annular gallery 62 communicating through radial drillings with the interior cylindrical space in which the piston 60 slides. The body part 51 has a passage 63 in permanent communication with the gallery 62 and a further passage 64 which is axially spaced from the passage 63 and communicates with the space defined between the piston 58, the end of the sleeve 61 and the cylindrical extension 59 of the piston 58. The assembly contained within the body part 51 represents the trigger valve 16 of Figure 1 and the external connection to the clutch in the form of the rod 56, is the equivalent of the connection 26 in Figure 1.

The air transfer plate 53 has drillings 65, 66 communicating with respective recesses 67, 68 in this plate at opposite sides thereof. The drilling 65 communicates with the passage 63. The recess 68 is in communication with the cylindrical space within the sleeve 61 and this represents the pneumatic bias 27 of Figure 1. The drilling 68 communicates through a passage 69 with an inlet 70 in the body part 52, this being the main air supply inlet equivalent to 28 in Figure 1. The passage 64 from the cylindrical space within the body part 51 is open to atmosphere.

The body part 52 has an internal cylindrical space containing a fixed sleeve 71 within which is an axially slidable spool 72. The spool has three lands 73, 74, 75 each having a seal groove. The lands engage within the fixed sleeve 71 and the spool has a piston extension 76 at one end which engages in the cylindrical space within the body part 52 between the end of the sleeve 71 and the end of such cylindrical space. The spool 72 is preferably made up of a number of parts screwed together. In this example there are three such parts. The inlet 70 in the body part 52 communicates with a gallery 77 in the sleeve 71 the gallery having radial inlet drillings 78 into the space within the sleeve in which the spool 72 slides. There are three further galleries 78, 79, 81 and there are also radial drilling 82, 83, 84 which permit communication into the interior space in which the spool 72 slides. The gallery 78 is open to atmosphere through a passage 85 and the other two galleries 79, 81 communicate with respective outlets 86, 87 in the body part 52. These are shown in Figure 3 and are spaced axially apart and are disposed at opposite sides of the body part. These two outlets 86, 87 represent the equivalent of the outputs
42, 43 in the Figure 1 diagram.

The recess 67 in the transfer plate 53 on the side
thereof presented towards the said body part 52
communicates with the interior space within the sleeve 71
and also communicates with a passage 88 passing
longitudinally through the body part 52 parallel with, but
not otherwise in communication with the cylindrical space
occupied by the sleeve 71 and spool 72. The assembly
contained within the body part 52 is the equivalent of
the control valve 17 in the Figure 1 diagram.

At the opposite end of the body part 52 from the
transfer plate 53 is a further body part 89. This
defines an internal annular space occupied by a fixed
sleeve 91. The axis of this sleeve is perpendicular
to the axis of the sleeve 71 and spool 72 of the control
valve. At one end the cylindrical space communicates
through a passage 92 with the passage 88 in the body
part 52.    At the other end the body part is closed by a
cover 93 containing an inlet port 94 which is the
equivalent of the inlet 21 of the pre-select valve.
Within the interior of the sleeve 91 a valve stem 95 is
provided. This is carried on two diaphragms 96, 97 having
their edges secured in the body part 89 and having valve
portions arranged to locate alternatively on seatings
98, 99 on the ends of the sleeve 91. The pressure which
normally exists in the passage 92, biases the diaphragm
96 so that its valve member engages on the seating 98,
so that the other diaphragm 97 is off its seating 99.

The sleeve 91 has radial drillings 101 communicating
with an annular external groove 102 which in turn
communicates with a port 103, into the space within the
body part 52 in which the piston 76 on the end of the
spool 72, slides. A further annular groove 104 in the
exterior of the sleeve 91 communicates with an outlet
port 105 to atmosphere and also communicates with the
space above the diaphragm 97 through a drilling 106.
By this route it is possible for air in the interior of the
body part 52 behind the piston 76 therein to reach the
atmosphere when the diaphragm 97 is off its seating 99,
as shown in Figure 2.

The inlet 94 is connected to the driver control 11
(see Figure 1) and when this is pressurised, the valve stem
95 moves to close the diaphragm 97 onto its seating 99,
thus blocking access to the port 105. This is in opposition
to the bias which is exerted on the diaphragm 96 through
the passage 92, the passage 88, the recess 67, the passage
63, and when the clutch is actuated to move the piston
60 through the recess 68 and the inlet 70. At the same
time access to the port 64 is closed. This also has
the effect of pushing the spool 72 so that the inlet
70 can communicate between the lands 74, 75 on the spool 72
with the output 86 and the output 87 which lead to the
actuator 44, 45 or 47, as previously described.

Since bias exists on both ends of the spool 72,
its position is dependent upon the last application of
pressure applied to it. In the position shown in Figure 2
and Figure 3 the air supply can escape through the outlet
85 through the space between the lands 73 and 74 on the
spool 72.

It is possible to use three separate valves instead of the three combination valve unit shown, though this combination unit is convenient in that it is very compact.

It is possible to provide motive fluid in liquid form to the system for example hydraulic oil. However it is not possible to allow escape of the oil, as is possible in an air system, and suitable circuitry is needed to return any excess oil to a reservoir.

The supply of air under pressure may be obtained from a special source provided for the purpose or alternatively from a source of air under pressure needed for other purposes on a vehicle, to which the system may be fitted.

## CLAIMS

1. A splitter control for a transmission which has a multi-ratio gearbox and an auxiliary splitter unit, the gearbox having a selector mechanism and the splitter unit having a separate selector arranged to acutate said control to pre-select a ratio in said splitter unit, and a clutch actuator connected to the control whereby the ratio change in the splitter unit is actuated, the control being operable by fluid pressure, characterised in that the control includes a pre-select valve, a control valve and a trigger valve, the pre-select valve being arranged to receive a signal from the selector of the splitter unit, the trigger valve being connected to the clutch actuator to actuate the control valve, whereby the actuation of the ratio change in the splitter unit is carried out.

2. A splitter control as claimed in claim 1 characterised in that the pre-select valve, the trigger valve and the control valve are respective spool valves, contained in a single valve block.

3. A splitter control as claimed in claim 1 or claim 2 characterised in that the selector for the splitter unit includes a valve which is manually operable and which provides a fluid pressure signal to the pre-select valve.

4. A splitter control as claimed in any one of the preceding claims characterised in that there is a delay chamber between an input for fluid under pressure and the control valve to allow pressure equalisation in a fluid pressure operated biasing device of the control valve.

5.    A splitter control as claimed in any one of the
preceding claims characterised in that the pre-select
valve has a fluid pressure operated biasing device which
can be opposed by a signal received from the splitter
unit selector, in one direction.

6.    A splitter control as claimed in any one of the
preceding claims characterised in that the connection
between the clutch actuator and the trigger valve is a
mechanical link.

7.    A splitter control as claimed in either of claims
4 or 5 characterised in that fluid pressure operable
biasing devices are normally de-energised, except for
that of the pre-select valve upon receipt of a signal
in one direction.

8.    A splitter control as claimed in any one of the
preceding claims characterised by a fluid pressure
operated splitter actuator, which is arranged to be
actuated by the control valve, to carry out the slection
in the splitter unit.

Fig. 1

1/2

0037197

Fig. 2

Fig. 3